# EUROPÄISCHE PATENTSCHRIFT

(11) **EP 2 697 277 B1**
(45) Veröffentlichungstag und Bekanntmachung des Hinweises auf die Patenterteilung: **01.02.2017**
(21) Anmeldenummer: 12713948.3
(22) Anmeldetag: 04.04.2012
(51) Int. Cl.: C08G 18/08, C08G 18/22, C08G 18/24, C08G 18/26, C09J 175/04, C09J 175/06

(54) **PU-ZUSAMMENSETZUNGEN MIT KOMPLEXIERTEN KATALYSATOREN**
PU COMPOSITIONS CONTAINING COMPLEXED CATALYSTS
COMPOSITIONS DE PU CONTENANT DES CATALYSEURS SOUS FORME DE COMPLEXES

(30) Priorität: 15.04.2011 DE 102011007504
(43) Veröffentlichungstag der Anmeldung: 19.02.2014
(73) Patentinhaber: Henkel AG & Co. KGaA, 40589 Düsseldorf (DE)
(72) Erfinder: EICHELMANN, Holger, 40724 Hilden (DE); LOSCHEN, Christoph, 40699 Erkrath (DE); POEL, Andre te, 47877 Willich (DE); BLODAU, Marcel, 47807 Krefeld (DE); STEINHAUSEN, Natalie, 45359 Essen (DE)
(86) Internationale Anmeldenummer: PCT/EP2012/056128
(87) Internationale Veröffentlichungsnummer: WO 2012/139940

(56) Entgegenhaltungen:
- EP-A1- 1 857 480
- US-A- 4 426 510
- US-A1- 2007 117 888

## Beschreibung

Die Erfindung betrifft vernetzende Zusammensetzungen, die Metallkatalysatoren mit ausgewählten Liganden enthalten. Dabei zeigen die Katalysatoren eine verzögerte Reaktivität bei der Katalyse von PU-Zusammensetzungen.

Die EP 1857480 beschreibt 2-Komponenten-Klebstoffe, die Sn-Katalysatoren und Blockierungsmittel enthalten. Dabei werden als Blockierungsmittel Hydroxychinolinverbindungen beschrieben. Die US 2006/0180274 beschreibt 1 K-PU-Systeme mit Bi-Katalysatoren, die zusätzlich aromatische Stickstoff-haltige Verbindungen enthalten.

Die US 6084026 beschreibt vernetzende Systeme, die Isocyanate und Polyolverbindungen enthalten, wobei zusätzlich Carbon- oder Sulfonsäuren enthalten sein müssen sowie Substanzen der Klassen N-haltige Ringe, β-di-Carbonylverbindungen oder α-Hydroxyverbindungen. Cyclische α-Hydroxyketone werden nicht beschrieben.

Die US 2008/0099141 beschreibt das Verkleben von Laminaten mit PU-Klebstoffen, wobei ein Metallkatalysator zugesetzt wird sowie ein Blockierungsmittel. Dieses wird als 1,2 Diphenol- oder als Mercaptoverbindungen beschrieben.

Die DE 198 40 318 beschreibt reaktionsfähige Massen aus Isocyanat-haltigen Prepolymeren und Polyolen. Diese enthalten eine Katalysatorkombination, wobei der Katalysator ein Umsetzungsprodukt aus organischen Zinn- oder Wismuthverbindungen ist, einer Thiol-haltigen Verbindung oder ein reaktionsfähiges Polyphenol mit benachbarten OH-Gruppen in Gegenwart eines tertiären Amines und einer hydrolyierbaren Halogenverbindung.

Die DE 44 44 249 beschreibt eine Katalysatorzusammensetzung zur Herstellung von Polyurethanen, die mindestens ein tertiäres Amin und mindestens eine organische Säure enthalten. Dabei wird als organische Säure Benzoesäure eingesetzt, die zusätzlich mindestens eine weitere zu mit einer Isocyanat-Gruppe befähigte Gruppe am aromatischen Ring gebunden enthält. Es werden keine Zinnkatalysatoren beschrieben.

Die DE 37 09 631 beschreibt einen aktivierbaren Katalysator zur Umsetzung einer Hydroxyverbindung mit einer Isocyanatverbindung. Der aktivierbare Katalysator wirkt in Gegenwart eines Amin-Aktivators, umfasst eine Zinn- oder einen Wismuthkatalysator und einen molaren Überschuss eines Komplexierungsmittels. Als Komplexierungsmittel werden Mercaptoverbindungen oder in Gegenwart von tertiären Aminen reaktionsfähige Polyphenole beschrieben. Unter anderem werden auch zusätzlich α-Hydroxyketone beschrieben. Die Verwendung von zyklischen α-Hydroxyketonen alleine wird nicht beschrieben.

Die US 4,426,510 A beschreibt Beschichtungs- oder Klebstoffzusammensetzungen mit verlängerter Topfzeit und kurzer Aushärtezeit, umfassend ein organisches Polyol, ein organisches Polyisocyanat, einen Organo-Zink-Aushärtungskatalysator, und eine Verbindung ausgewählt aus (a) β-Dicarbonyl-Verbindungen, (b) α-Hydroxy-Ketonen, (c) β-Hydroxy-Ketonen mit miteinander verbundenen aromatischen Ringen und (d) (3-Hydroxy-Stickstoff-Heterozyklen mit miteinander verbundenen aromatischen Ringen. Die in den Beispielen aufgeführten Zusammensetzungen enthalten Zinkoctoat als Katalysator und 2,4-Pentandion (eine β-Dicarbonyl-Verbindung). Die Verwendung von zyklischen α-Hydroxyketonen und/oder Triphenolen mit drei benachbarten OH-Gruppen wird nicht offenbart.

Die US2007/0117888 A1 beschreibt ein Additivsystem, um die Topfzeit von lösungsmittelbasierten Zweikomponenten-Polyurethan-Beschichtungsmitteln zu erhöhen. Das Additiv basiert auf Metallkatalysatoren ausgewählt aus Kobalt, Mangan oder Mischungen daraus in einem Gewichtsanteil von 0,01-0,10 % und einem organischen Chelatbildner in einem Gewichtsanteil von 0,03-0,5 % bezogen auf das feste Harz. In einigen Beispielen werden Zusammensetzungen offenbart, die 2,4-Pentandion (eine β-Dicarbonyl-Verbindung) enthalten. Die Verwendung von zyklischen α-Hydroxyketonen und/oder Triphenolen mit drei benachbarten OH-Gruppen wird nicht offenbart.

Es ist bekannt, dass Polyurethanvernetzungsreaktionen als Reaktion Isocyanat mit Wasser oder als Reaktion Isocyanat mit OH-Komponenten durch Metall- oder Aminkatalysatoren beschleunigt werden. Dabei ist es vielfach erwünscht, eine möglichst schnelle Reaktion zu erzielen. Auf der anderen Seite sind Katalysatoren bekannt, die nur eine langsame Reaktivität zeigen. Das erlaubt eine längere Verarbeitungszeit der Materialien, ggf. können auch die als Klebstoff oder Dichtungsmittel aufgetragenen Zusammensetzungen am Anfang der Aushärtung noch bearbeitet werden. Ein Nachteil solcher langsamen Katalysatoren liegt aber zwangsläufig darin, dass auch die vollständige Vernetzung einer entsprechenden Zusammensetzung lange dauert. Erst nach dieser Endaushärtung können solche Zusammensetzungen weiter bearbeitet werden, vorher sollten die Substrate fixiert werden, damit die gewünschte Anordnung erhalten bleibt. Diese langen Reaktionszeiten sind also für die weitere Verarbeitung nachteilig.

Aufgabe der vorliegenden Erfindung ist es deshalb Katalysatorzusammensetzungen und vernetzbare Polyurethanzusammensetzungen zur Verfügung zu stellen, die eine Induktionsphase aufweisen, in der die katalytische Reaktivität noch vermindert ist, nach dieser Induktionsperiode aber eine hohe Reaktivität und katalytische Wirkung aufweisen, um eine schnelle Vernetzung des zu vernetzenden Systems zu erzeugen. Dabei sollen diese Katalysatorsysteme für Vernetzungsreaktionen auf Basis von Polyurethanen geeignet sein oder aber auch für Vernetzungsreaktionen über Silankondensation vernetzende Systeme eingesetzt werden können. Ebenso ist es eine Anforderung, dass die katalysierenden Zusammensetzungen in 1 K-System oder 2K-System gemischt werden können und dort lagerstabile Zusammensetzungen ergeben.

Gegenstand der Erfindung ist eine vernetzbare Zusammensetzung enthaltend reaktive Polymere ausgewählt aus (i) Prepolymeren, die reaktive NCO-Gruppen aufweisen, oder (ii) Polymeren, die reaktive Silan-Gruppen aufweisen, gegebenenfalls weitere Additive, und mindestens einen Katalysator auf Metall-Basis, wobei die Zusammensetzung bis zu 10 Gew-% einer retardierenden Substanz enthält, ausgewählt aus cyclischen α-Hydroxyketonen und/ oder Triphenolen mit drei benachbarten OH-Gruppen.

Ein weiterer Gegenstand der Erfindung ist eine Katalysatorzusammensetzung auf Basis von Verbindungen mit Metallatomen, die ausgewählt sind aus Sn, Ti, Zn, Pb, Bi, Fe, Co oder Ni und als Liganden eine retardierende Substanz, ausgewählt aus cyclischen α-Hydroxyketo- 5-, 6- oder 7-Ring-Verbindungen und/ oder, ggf. substituierten, 2,3,4 - oder 3,4,5-Triphenolen. Ein weiterer Gegenstand der Erfindung ist die Verwendung solcher Katalysatorzusammensetzungen zur Vernetzung von Polymerzusammensetzungen, die über NCO/OH- Reaktion oder über die SiOR-Kondensation vernetzen.

Erfindungsgemäße Zusammensetzungen sind solche, die mindestens ein Polymer enthalten, das NCO-Gruppen oder Silan-Gruppen aufweist. Dabei kann es sich um Polymere handeln, die funktionelle Gruppen in der Polymerkette enthalten, es kann sich um Oligomeren mit den entsprechenden funktionellen Gruppen handeln oder um Gemische. Erfindungsgemäße Zusammensetzung sind auch solche, die monomere oder oligomere Polyisocyanate enthalten, die mit Polymeren vernetzen, die mindestens zwei mit NCO-Gruppen reaktive Gruppen aufweisen. Die Zusammensetzungen können noch weitere Bestandteile enthalten.

Eine erfindungsgemäße Zusammensetzung kann eine 2-Komponenten Zusammensetzung sein, die als eine Komponente NCO-Gruppen-haltige Prepolymere enthält oder Polyisocyanate, als zweite Komponente mindestens einen Vernetzer enhält, der mindestens zwei mit NCO-Gruppen reagierende funktionelle Gruppen aufweist, zusammen mit weiteren Zusatzstoffen. Eine andere erfindungsgemäße Zusammensetzung kann ein 1-Komponenten Zusammensetzung sein, die ein NCO-Gruppen-haltiges Prepolymer enthält, zusammen mit weiteren Zusatzstoffen. Eine weitere erfindungsgemäße Zusammensetzung kann eine Zusammensetzung sein, die ein Silan-Gruppen-haltiges Prepolymer enthält, zusammen mit weiteren Zusatzstoffen.

Weiterhin ist in einer Komponente ein Metallkatalysator und mindestens eine erfindungsgemäß notwendig retardierende Substanz enthalten, beispielsweise cyclische α-Hydroxyketone, wie α-Hydroxyketo- 5-, 6- oder 7-Ring-Verbindungen und/oder ggf. substituierte 2,3,4 - oder 3,4,5 - Triphenol- Derivate.

Beispiele für NCO-Gruppen tragende Polymere sind Polyurethan-Prepolymere mit mindestens zwei Isocyanatgruppen, die beispielsweise durch Umsetzung einer Polyolkomponente mit einem mindestens difunktionellen Isocyanat im stöchiometrischen Überschuss erhältlich sind.

PU-Prepolymere im Sinn der vorliegenden Erfindung sind Umsetzungsprodukte von OH-Gruppen oder NH-Gruppen-tragenden Verbindungen mit einem Überschuss von Polyisocyanaten. Die bei der Synthese der PU-Prepolymere einsetzbare Polymere und Polyisocyanate sind dem Fachmann bekannt. Es handelt sich dabei um die für Klebstoffanwendung bekannten Polyole oder entsprechende Verbindungen mit sekundären und/oder primären Aminogruppen. Insbesondere geeignet zur Synthese dieser Prepolymere sind Polyole mit einem Molekulargewicht bis zu 20000 g/mol (zahlenmittleres Molekulargewicht, MN, wie durch GPC bestimmbar). Es kann sich dabei beispielsweise um Polyole auf Basis von Polyethern, Polyestern, Polyolefinen, Polyacrylaten, Alkylenpolyolen handeln, oder als andere Ausführungsform analoge Verbindungen mit NH-Gruppen.

Die Polyolkomponente oder das Polyamin kann dabei niedermolekular sein, beispielweise von ca. 60 g/mol bis 1500 g/mol, es können jedoch auch höher molekulare Polymere umgesetzt werden, beispielsweise solche mit einem Molekulargewicht von 1500 bis 20.000 g/mol. Es ist auch möglich, Verbindungen mit mehreren funktionellen Gruppen umzusetzen, bevorzugt sollen im Durchschnitt zwei reaktive Gruppen an dem Polymer vorhanden sein. Es sind OH-Gruppen-haltige Ausgangsverbindungen bevorzugt, insbesondere Diole.

Als Polyisocyanate können bei der Prepolymersynthese die an sich bekannten Polyisocyanate mit zwei oder mehr Isocyanat-Gruppen eingesetzt werden. Geeignete Polyisocyanate sind aromatische Isocyanate, aliphatische oder cycloaliphatische Isocyanate. Beispiele sind 1,5-Naphthylendiisocyanat, 2,4-oder 4,4'-Diphenyl-methandiisocyanat (MDI) und Gemische der Isomere, hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3- oder 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), phosphor- oder halogenhaltige Diisocyanate, Tetramethoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), 1,4-Diisocyanatobutan, 1,12-Diisocyanatododecan, oder Dimerfettsäurediisocyanat. Es können auch polyfunktionelle Isocyanate eingesetzt werden, wie durch Trimerisation oder Oligomerisation von Diisocyanaten oder durch Reaktion von Di-isocyanaten mit polyfunktionellen hydroxyl- oder aminogruppenhaltigen Verbindungen entstehen. Bevorzugt werden Diisocyanate eingesetzt.

Durch die Menge der Isocyanate kann die Reaktionsführung beeinflusst werden. Wird ein hoher Überschuss an Isocyanaten eingesetzt, entstehen PU-Prepolymere, bei denen die OH-Gruppen in Isocyanatgruppen funktionalisiert worden sind. Dabei wird nur ein geringer Molekulargewichtsaufbau festgestellt. Werden geringere Mengen an Isocyanaten eingesetzt oder wird die Reaktion stufenweise durchgeführt, ist es bekannt, dass das Molekulargewicht der Prepolymere im Vergleich zu den Ausgangsverbindungen erhöht wird. Insgesamt muss in diesem Falle sichergestellt sein, dass ein Überschuss an Isocyanat bezogen auf die Gesamtreaktion eingesetzt wird.

Die Umsetzung der Polyolverbindung mit den Isocyanaten kann auf bekannte Art und Weise erfolgen. Es ist es möglich, dass nicht abreagierte Isocyanate in der Reaktionsmischung vorhanden sind. Eine andere Arbeitsweise stellt durch die Art der Reaktionsführung sicher, dass nur geringe Anteile von monomeren, nicht umgesetzten Isocyanaten in der Mischung vorhanden sind. Eine weitere Arbeitsweise destilliert nicht reagierte Diisocyanate ab, so dass besonders monomerarme Produkte hergestellt werden können.

Für die Erfindung können die bekannten PU-Prepolymere mit reaktiven NCO-Gruppen eingesetzt werden. Solche sind dem Fachmann bekannt und können auch kommerziell erhalten werden. Insbesondere bevorzugt sind im Rahmen dieser Erfindung PU-Prepolymere, die auf Basis von Polyesterpolyolen oder Polyetherpolyolen durch Umsetzung mit Diisocyanaten hergestellt worden sind. In der Regel weisen die im Rahmen der vorliegenden Erfindung geeigneten PU-Prepolymere ein Molekulargewicht von 500 bis etwa 30.000 g/mol auf, bevorzugt bis 15.000 g/mol, insbesondere von 1000 bis 5.000 g/mol (M_{N}, zahlenmittleres Molekulargewicht, wie mit GPC gegen Polystyrolstandard zu bestimmen).

Unter PU-Prepolymeren sollen im Rahmen dieser Erfindung auch Gemische von Prepolymeren mit weiteren gleichen oder verschiedenen Polyisocyanaten verstanden werden. Diese können bei der Herstellungsreaktion der Prepolymere bereits enthalten sein, sie können aber auch später der Zusammensetzung zugesetzt werden. Eine andere Ausführungsform als 2K-NCO-Zusammensetzung setzt als NCO-reaktive Komponente nur Polyisocyanate ein, die nicht weiter umgesetzt wurden. Es kann sich bei den Polyisocyanaten um aliphatische, aromatische oder polymere Isocyanate handeln, die oben bereits aufgeführt wurden.

In dem geeigneten PU-Prepolymer oder den Polyisocyanaten können noch weitere Hilfsstoffe und Additive enthalten sein. Es ist darauf zu achten, dass hier nur solche Bestandteile zugesetzt werden, die nicht mit den Isocyanatgruppen reagieren können.

Die oben genannten Prepolymere können als 1 K-PU eingesetzt werden. Die vernetzen dann mit Wasser oder Feuchtigkeit. Eine bevorzugte Ausführungsform setzt solche Prepolymere als 2K-PU ein. Dann ist es notwendig eine weitere Komponente B zu einer erfindungsgemäßen 2-K PU-Zusammensetzung unmittelbar vor der Applikation zu mischen, die mit dem reaktiven Prepolymeren vernetzt.

Diese Komponente B muss mindestens eine Verbindung enthalten, die mindestens zwei gegenüber Isocyanatgruppen reaktive Gruppen aufweist. Beispielsweise kann es sich dabei um SH-, COOH-, NH- oder OH-Gruppen handeln, insbesondere sind Polyole bevorzugt, wobei es sich auch um Mischungen von Polyolen unterschiedlicher chemischer Struktur oder unterschiedlichen Molekulargewichts handeln kann. Diese Verbindungen wirken als Vernetzer.

Als Polyolkomponente zum Einsatz in der Komponente B eine Vielzahl von Polyolen geeignet. Es kann sich beispielsweise um solche mit zwei bis zu 10 OH-Gruppen pro Molekül handeln. Es können aliphatische Verbindungen sein, es kann sich um aromatische Verbindungen handeln, es können auch Polymere eingesetzt werden, die eine ausreichende Anzahl von OH-Gruppen tragen. Es kann sich um primäre oder sekundäre OH-Gruppen handeln, soweit eine ausreichende Reaktivität mit den Isocyanatengruppen gegeben ist.

Beispiele für solche Polyole sind niedermolekulare aliphatische oder aromatische Polyole mit bevorzugt zwei bis zehn OH-Gruppen, insbesondere mit 2 bis 36 C-Atomen. Beispiele dafür sind C2 bis C24-Polyole, wie Ethlyenglykol, Propylenglykol, Butandiol-14, Hexandiol-16, Oktandiol-18, Dimerfettsäurediole, Diethylenglykkol, Triethylenglykol, Dipropylenglykol, Glycerin, Trimethylolpropan, Pentaerythrit oder Zuckeralkohole; 1-Ring Polyole, wie Resorcin, Pyrogallol, Hydrochinon und deren Derivate oder andere aromatische Polyole.

Weitere Gruppen von geeigneten Polyolverbindungen sind polymere Lactone oder Polyacetale, soweit diese mindestens zwei funktionelle Gruppen aufweisen und ein entsprechendes geeignetes Molekulargewicht. Ebenso sind als Polyolverbindungen OHfunktionelle Poly(meth)acrylate geeignet. Solche Poly(meth)acrylate sind beispielsweise erhältlich durch Polymerisation von ethylenisch ungesättigten Monomeren, wobei eine Anzahl der monomeren zusätzlich eine OH-Gruppe tragen. Eine weitere Gruppe von Polyolen sind OH-Gruppen-haltige Polyurethane. Dabei können die bekannte Polyurethane als Reaktionsprodukt aus Polyolen und mit einem Unterschuss an Isoyanaten hergestellt werden.

Eine andere Gruppe geeigneter Polyole sind beispielsweise Polyether. Es handelt sich dabei um die Umsetzungsprodukte von Alkylenoxiden mit 2 bis 4 C-Atomen mit niedermolekularen Alkoholen. Beispiele für solche Verbindungen sind Polypropylenglykol, Polyethylenglykol, Poly-THF.

Eine weitere geeignete Gruppe von Polyolverbindungen sind Polyesterpolyole. Es können die für Klebstoffe bekannten Polyesterpolyole eingesetzt werden. Beispielsweise handelt es sich um die Umsetzungsprodukte von Diolen, insbesondere niedermolekularen Alkylendiolen oder Polyetherdiolen mit Dicarbonsäuren. Es kann sich dabei um aliphatische, aromatische Carbonsäuren oder Gemische davon handeln. Gegebenenfalls können auch Ester dieser Carbonsäuren oder Anhydride umgesetzt werden. Dem Fachmann sind solche Polyesterpolyole in vielen Ausgestaltungen bekannt.

Eine weitere Gruppe von geeigneten Polyolen sind Polycarbonatpolyole. Diese können durch Reaktion von niedermolekularen Diolen mit sublimierten cyclischen Carbonaten hergestellt werden. Solche Polyole sind dem Fachmann bekannt und kommerziell erhältlich.

Die Polyole können ein Molekulargewicht von ca. 50 bis etwa 20000 g/mol aufweisen, insbesondere von 250 bis 10000 g/mol. Solche Polyole sind kommerziell verfügbar.

Eine andere Ausführungsform der Erfindung setzt Polymere ein, wobei das Polymer anreagierte -Si(OR)n enthält mit n = 2 oder 3. Diese Silan-vernetzenden Systeme sind in Abwesenheit von Wasser lagerstabil. Als Polymere können Polymere eingesetzt werden, die bei der Herstellung oder nachträglich Silan-vernetzende Gruppen anreagiert enthalten. Beispielsweise kann es sich um Polyurethane, Polyacrylate, Polyolefine, Polyether, Polyester handeln, als Homo- oder Copolymer, als statistisches oder Blockcopolymer. Silangruppen können durch Umsetzung mit Silan-haltigen Monomeren einpolymerisiert werden oder durch nachträglich Funktionalisierung mit bifunktionellen Silan-haltigen Verbindungen, die mit geeigneten Gruppen der Polymere umgesetzt werden können. Solche Polymere können ein Molekulargewicht (M_{N}) von bis zu 20000 g/mol aufweisen. Insbesondere handelt es sich um flüssige Polymere. Entsprechende Silan-haltige Polymere sind bekannt und kommerziell erhältlich.

Es sind auch 2K-Silan-vernetzende Systeme bekannt, wobei dann die zweite Komponente ebenfalls Silan-Prepolymere enthalten kann, es aber auch möglich in der zweiten Komponente niedermolekulare Silane zu verwenden. Alternativ kann eine zweite Komponente auch Wasser enthalten. Zusätzlich können in dieser zweiten Komponente zusätzlich die üblichen bekannten Additive und Hilfsstoffe enthalten sein.

Die erfindungsgemäßen 1 K- oder 2K-Zusammensetzungen können weiterhin Hilfsstoffe enthalten. Diese sollen gegen die reaktiven Gruppen der Polymere inert sein, sollen also lagerstabile Zusammensetzungen ergeben. Darunter werden Stoffe verstanden, die in der Regel zugesetzt werden, um die Eigenschaften der wesentlichen Komponenten in gewünschter Richtung zu verändern, z.B. deren Verarbeitbarkeit, Lagerfähigkeit und auch Gebrauchseigenschaften dem konkreten Anwendungsgebiet anzupassen. Beispiele dafür sind fein verteilte Farbstoffe, Füllstoffe, Verlaufsmittel, Netzmittel, Thixotropiermittel, Harze, Alterungsschutzmittel, Stabilisatoren, Lichtschutzmittel, Weichmacher, Lösemittel und/oder Haftvermittler.

Als Füllstoffe oder Pigmente geeignet sind gegenüber Isocyanaten nicht reaktive anorganische Verbindungen wie Kreide, beschichtete Kreide, Kalkmehl, Calcium-Magnesium-Carbonate, Aluminiumoxide und -hydroxide, gefällte Kieselsäure, Zeolithe, Bentonite, Glas, Hohlkugeln, Titandioxid, Bariumsulfat oder andere schwer lösliche Oxide, Sulfate, Carbonate von Metallen, soweit diese als Pulver vorliegen, d.h. eine Korngröße zwischen 1 bis 200 µm aufweisen, insbesondere zwischen 3 bis 50 µm. Solche Füllstoffe liegen nach dem Mischen in der Zusammensetzung dispergiert vor.

Als weiteren Bestandteil kann die erfindungsgemäße Zusammensetzung klebrigmachende Harz enthalten. Das Harz bewirkt eine zusätzliche Klebrigkeit. Beispiele dafür sind aromatische, aliphatische oder cycloaliphatische Kohlenwasserstoff-Harze, modifizierte Naturharze, Kolophonium, Terpen-Harze, Acrylsäure-Copolymerisate oder Styrolpolymere.

Als weiterer optionaler Betandteil können Weichmacher enthalten sein. Diese werden vorzugsweise zum Einstellen der Viskosität oder der Flexibilität verwendet und sollen mit dem Polymeren gut verträglich sein. Geeignete Weichmacher sind beispielsweise medizinische Weißöle, naphtenische Mineralöle, paraffinischen Kohlenwasserstofföle, Polypropylen-, Polybuten-, Polyisopren-Oligomere, hydrierte Polyisopren- und/oder Polybutadien-Oligomere, Benzoatester, Phthalate, Adipate, Polypropylenglykol oder Polybutylenglykol.

Weiterhin können Verlaufmittel, Thixotropiemittel, Stabilisatoren und/oder Lichtschutzmittel enthalten sein. Solche Additive sind dem Fachmann für verschiedene Anwendungszwecke bekannt. Lösemittel können zugesetzt werden, soweit sie gegen NCO-Gruppen inert sind.

Eine erfindungsgemäße Zusammensetzung muss einen Metallkatalysator enthalten. Es handelt sich dabei um Verbindungen, die ein Metallatom zusammen mit organischen Resten aufweisen. Beispiele sind Metalle, wie Zinn, Titan, Zink, Blei, Wismut, Eisen, Kobalt, Nickel, Calcium, Barium, Mangan, Vanadium, Zirkon, und/oder Aluminium. Diese können beispielsweise als Carbonsäuresalz, Chelat, wie beispielsweise Acetylacetonat, Hydroxid, Alkoholat, Phenolat, Oxid vorliegen, es sind auch gemischte Gruppen in dem Metallkatalysator bekannt.

Es handelt sich dabei insbesondere um Verbindungen von Sn, Fe, Ti, Al, Bi oder Zr als Carbonsäuresalz, Oxid , Hydroxid oder Acetylacetonat. Die Menge kann 0,001 bis 10 Gew-% bezogen auf die gesamteZusammensetzung betragen. Bevorzugte Mengen sind 0,01 bis 5 Gew-%, insbesondere 0,01 bis 3 Gew-%.

Erfindungsgemäß muss die Zusammensetzung außerdem bis zu 10 Gew-% mindestens einer retardierenden Substanz enthalten. Als retardierende Substanz sind solche Verbindungen zu verstehen, die zusammen mit einem Metallkatalysator am Anfang die Vernetzungsreaktion langsam verlaufen lassen, mit der Zeit die Reaktionsgeschwindigkeit aber schneller wird. Diese kann mit dem Katalysator umgesetzt sein als Chelatverbindung, sie kann mit dem Katalysator als gemischtes Vorprodukt zugesetzt werden oder sie wird der vernetzenden Zusammensetzung an sich zugesetzt. Die retardierende Substanz wird ausgewählt aus cyclischen α-Hydroxyketonen und/ oder Triphenolen mit drei benachbarten OH-Gruppen. Die α-Hydroxyketone können verschiedene Strukturen aufweisen. Beispielsweise kann es sich um aliphatische oder cycloaliphatische Verbindungen handeln, es können auch aromatische Verbindungen mit einem oder mehreren ankondensierten Phenylringen eingesetzt werden. Sie können am Grundgerüst Substituenten aufweisen, es ist auch möglich Substanzen mit mehreren gleichartigen Gruppen einzusetzen. Als weitere Substanzklasse mit den erfindungsgemäßen Wirkungen können auch Triphenole mit drei benachbarte OH-Phenolgruppen eingesetzt werden. Diese können ebenfalls Substituenten tragen, wie Alkylsubstituenten oder aromatische Ringe.

Bei den α-Hydroxyketonen handelt es sich insbesondere um cyclische 5, 6 oder 7 RingStrukturen, die eine Keto-Gruppe und eine benachbarte α-OH-Gruppe aufweisen. Es können auch Heteroatome in Ring enthalten sein, beispielsweise O, N oder S. Es könne auch ein oder mehrere Alkyl- oder Aryl-Substituenten enthalten sein, die gegebenenfalls auch substituiert sein können. Auch ungesättigte Gruppen sind möglich. Geeignete Verbindungsklassen können durch die Formeln (I), (II), (III), (IV) oder (V) dargestellt werden, wobei ein bis drei Reste R1 am Ring enthalten sein können. 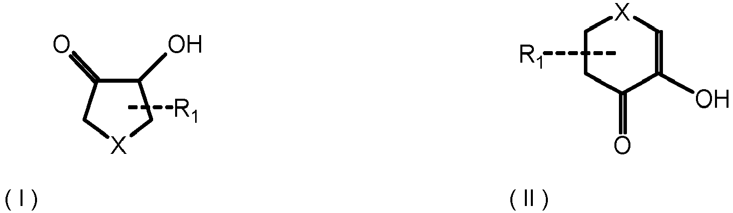 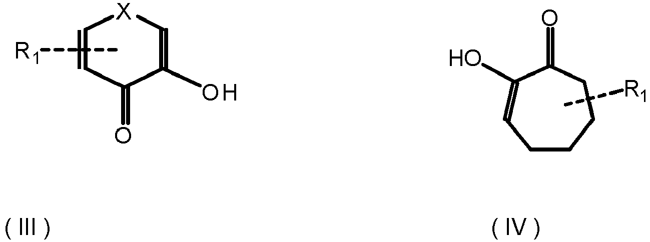 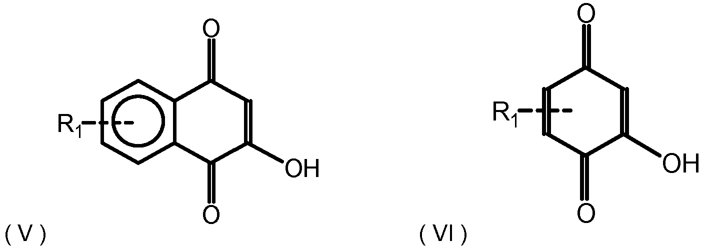
Mit X = NH, O, S
R₁ = C1 bis C 12-Alkyl; cyclische 5 oder 6-Ring Alkylreste; OH-substituierte Alkylreste, Alkylreste mit Ether-, Ester-, Amid-, Carboxyl-Gruppen; Arylreste oder Wasserstoff

Beispiele für geeignete aliphatische Verbindungen sind Hydroxyketone, die mindestens eine OH-Gruppe in α-Position aufweisen. Insbesondere sind auch vinyloge Formen von 1,2 Diketonen geeignet. Insbesondere sind cyclische Hydroxyketone geeignet. Solche Verbindungen können noch einen oder mehrere Substituenten aufweisen Als Substituenten R₁ sind bevorzugt cyclische oder lineare Alkylgruppen, sie können auch aromatische Ringe bilden. Ebenso können die Reste R₁ weitere Substituenten aufweisen, wie ungesättigte Gruppen, weitere OH-Gruppen, Carboxylgruppen, Ester- oder Amidgruppen oder Ethergruppen. Über R₁ können auch mehrer Hydroxyketo-Strukturen miteiander verbunden sein. Es können beispielsweise Hydroxy-4-Pyrone, Furanone, Thiofuranone, 1-Alkylpyrrole, Benzochinone, Naphthochinone, Pyranone, Hydropyridinone oder entsprechende 7-Ring Keton-Strukturen ausgewählt werden. Beispiele dafür sind 2,5-Dimethyl-4-Hydroxy-Furanon, 2-Hydroxyethyl-4-Hydroxy-Furanon, 2-Hydroxy-1,4-Naphthochinon, Maltol, Ethylmaltol, Kojisäure, α-Tropolon, 5-Alkyl-Tropolon, 5-Hydroxyalkyl-Tropolon, β-Thujaplicin, Flavonol, Morin, Fisetin oder entsprechende Strukturen.

Bevorzugt sind cyclische α-Hydroxyketone mit 5, 6 oder 7 Ringstrukturen geeignet, die eine zusätzliche Hydroxyalkylgruppe aufweisen, beispielsweise eine CH2-OH, C2H4-OH oder eine C3H6-OH-Gruppe, insbesondere wie in Formel (VI) dargestellt.

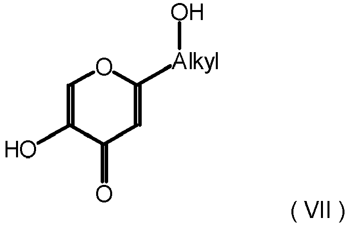

Eine andere Ausführungsform der Erfindung setzt als retardierende Substanz Triphenole mit drei benachbarten OH-Gruppen ein. Es handelt sich dabei um Verbindungen der allgemeinen Formel

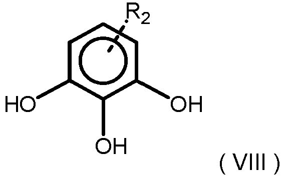

Wobei R₂ = H; C1 bis C 12-Alkylreste; cyclische 5 oder 6-Ring Alkylreste; solche Alkylreste mit Amino-, Ether-, Carboxyl-, Ester-, Amid- Gruppen; OH-substituierte Alkylreste; oder aromatische 6-Ringe sein können. Insbesondere sind -OH, - COOH oder -Ester-Substituenten geeignet. Beispiele dafür sind Gallussäure, Gallussäureester mit C1, C2, C3 bis C12 Alkoholen, Tannin, Pyrogallol, 5-Alkyl-Pyrogallol oder Verbindungen, die mehrere solcher Triphenol-Substituenten aufweisen. Insbesondere sind 1- R₂-3,4,5 -OH-Phenol- Derivate geeignet, wobei R₂ substituierte Alkylreste oder Cycloalkylreste mit Suaerstoff-enthaltenden funktionellen Gruppen bedeuten soll.

Die retardierenden Substanzen können auch mehrere gleichartige funktionelle Gruppen enthalten. Insgesamt soll das Molekulargewicht aber unter 500 g/mol betragen. Die Menge wird so ausgewählt, dass eine erfindungsgemäße Zusammensetzung bis zu 10 Gew-% der α-Hydroxyketone und/oder Triphenole enthält, insbesondere von 0,001 bis 5 Gew-%. Dabei sollen bezogen auf das Metallatom, 0,25 bis 4 Mol einer retardierenden Verbindung enthalten sein, entweder einzeln oder auch als Gemisch. Die Menge kann so gewählt werden, dass die Reaktionsgeschwindigkeit den Anforderungen der Applikation angepasst wird.

Unabhängig von einer Theorie wird angenommen, dass die retardierenden Verbindungen einen Komplex mit dem Metallatom bilden, der dann die gewünschte katalytische Wirkung zeigt.

Ein Gegenstand der Erfindung ist eine Katalysatorzusammensetzungen aus mindestens einer der oben genannten Metallverbindungen und der retardierenden Verbindung, wie dem α-Hydroxyketon und/oder dem ggf. substituierten Triphenol. Dabei können die Substanzen so ausgewählt werden, dass die Katalysatormischung farblos ist. Die Katalysatorzusammensetzung kann selbst flüssig sein, es ist jedoch auch möglich, dass diese in nicht reaktiven Lösemitteln, Ölen oder Weichmachern gelöst oder dispergiert vorliegen. Da nur geringe Mengen der Katalysatormischung in einer vernetzbaren Zusammensetzung eingesetzt werden, ist eine dadurch zugesetzte Menge an Lösemittel nicht wesentlich. Eine andere Ausführungsform setzt die Katalysatorzusammensetzung auf einem festen Trägermaterial ein, beispielsweise inerte pulverförmige Polymere oder anorganische Pulver mit großer Oberfläche. Dabei wird dann die retardierende Verbindung auch auf der Oberfläche des Trägermaterials gebunden. Eine weitere Ausführungsform bindet die retardierende Substanz chemisch an ein polymeres Rückgrat, und fügt diesem Umsetzungsprodukt dann eine geeignete Metallverbindung zu. Die erfindungsgemäße Katalysatormischung enthält eine retardierende Substanz. Um die gewünschte Katalysatoreigenschaften zu erhalten, ist es in einer Ausführungsform zweckmäßig, wenn keine weiteren katalytisch wirkenden Verbindungen enthalten sind. Beispielsweise sollen keine zusätzlichen Amino- oder tert. Amino-Verbindungen enthalten sein.

Besondere Ausführungsformen der Erfindung setzten Katalysatormischungen ein, die Sn oder Bi als Metallatom enthalten. Andere Ausführungsformen setzen retardierende Verbindungen ein, die im Substituenten insbesondere kein Schwefel- oder Stickstoffatom und keine Thiogruppe enthalten. Eine andere bevorzugte Ausführungsform setzt retadierende Verbindungen ein, die zusätzlich zu den komplexierenden Gruppen noch mindestens eine weitere funktionelle Gruppe insbesondere im Rest R₁ oder R₂ aufweist, beispielsweise OH-, Ester- oder Carboxylgruppen.

Diese Katalysatorzusammensetzungen können für die Katalyse von 1 oder 2 Komponentensystemen eingesetzt werden. Insbesondere geeignet sind sie für Zusammensetzungen, die durch eine NCO-OH-Reaktion oder eine Silan-Kondensation vernetzen können.

Bei den erfindungsgemäßen Zusammensetzungen handelt es sich um vernetzende 1K- oder 2K-Zusammensetzungen. Diese enthalten ein oder mehrere Polymere, die reaktive Gruppen aufweisen, beispielsweise Isocyanatgruppen oder hydrolisierbare Silangruppen. Zusätzlich zu den Polymeren können weitere Komponenten enthalten sein, beispielsweise Harze, Weichmacher, Haftvermittler, Reaktivverdünner, Lösemittel, Pigmente oder Füllstoffe, wie oben bereits aufgeführt. Gegebenenfalls ist es möglich, dass die Zusammensetzungen noch an sich bekannte Co-Katalysatoren enthalten, beispielsweise tert. Amine, wie DABCO, DBU, DBN oder polymere Amine.

Im Falle der 1 K-Systeme kann es sich um Polymere handeln, die NCO-Gruppen aufweisen. Wird die Zusammensetzung aufgetragen, ist sie danach der Luftfeuchtigkeit ausgesetzt. Zusammen mit der auf dem Substrat vorhanden Feuchtigkeit und der Luftfeuchtigkeit vernetzen diese NCO-Systeme. Das wird durch Katalysatoren gemäß der vorliegenden Erfindung beschleunigt.

Eine weitere Ausführungsform als 1 K-System setzt Polymere ein, die über Alkoxysilangruppen vernetzen können. Wird die Zusammensetzung aufgetragen, ist sie danach der Luftfeuchtigkeit ausgesetzt. Zusammen mit der auf dem Substrat vorhanden Feuchtigkeit und der Luftfeuchtigkeit vernetzen diese Systeme. Das kann ebenfalls durch Katalysatoren gemäß der vorliegenden Erfindung beschleunigt werden.

Eine besonders bevorzugte Ausführungsform setzt 2K-Überzugsmittel ein. Dabei kann eine Komponente eine NCO-haltige Komponente sein. Es kann sich dabei um monomere oder oligomere Isocyanate handeln, es ist aber auch möglich, dass die oben genannten NCO-haltige PU-Prepolymere eingesetzt werden. Die weitere Komponente soll Polymere enthalten, die Gruppen tragen, die mit den NCO-Gruppen der ersten Komponente reagieren können. Nach dem Mischen reagieren beide Komponenten üblicherweise spontan. Diese Reaktion kann durch die erfindungsgemäßen Katalysatoren beschleunigt werden. Es ist bevorzugt, wenn die Katalysatorzusammensetzung in der OH-Komponente vermischt vorliegt.

Es können auch 2K-Zusammensetzungen zusammen mit den erfindungsgemäßen Katalysatormischungen eingesetzt werden, die aus den oben beschriebenen 1 K- NCO-oder Silan-Systemen bestehen. Die zweite Komponente kann dann übliche verträgliche, inerte Polymere und Additive enthalten, sie enthält aber zusätzlich eine zur Vernetzung ausreichende Menge Wasser. Eine Mischung der beiden Komponenten ergibt dann ebenfalls eine vernetzende Zusammensetzung.

In der Ausführungsform zur Vernetzung von NCO-reaktiven Systemen ist es möglich, dass das cyclische α-Hydroxyketon oder das gegebenenfalls substituierte Triphenol bei der Vernetzungsreaktion in die vernetzte Masse mit eingebaut wird. Die funktionellen Gruppen können auch mit den NCO-Gruppen reagieren. Das führt zu vernetzten Massen, die einen komplexbildenden Liganden fest eingebaut enthalten. Damit kann auch eine verminderte Migration des Metallkatalysators erzielt werden.

Die erfindungsgemäßen Zusammensetzungen können als Klebstoff, Dichtstoff, Vergussmasse oder Beschichtungsmittel eingesetzt werden. Dabei sind Beschichtungsmittel üblicherweise in dünnflüssigem Zustand, so dass sie auf eine Substratoberfläche aufgetragen werden können und verlaufen. In der Ausführungsform als Dichtstoff sind üblicherweise höher viskose Zusammensetzungen ausgewählt, die häufig nicht selbst verfließend sind. Sie können thixotrope Eigenschaften aufweisen, das heißt, nach der Applikation bildet sich rasch eine Fließgrenze aus, so dass die aufgetragenen Massen nicht weiter fließen oder rutschen. In der Ausführungsform als Klebstoff sind fließfähige und thixotrope Klebstoffe bekannt. Auch Ausführungsformen sind möglich, die keine Lösemittel oder Weichmacher enthalten.

Die erfindungsgemäßen Zusammensetzungen enthalten einen Katalysator, der aus Metallatomen und retardierenden Verbindungen. Durch die Mischung des Katalysators mit der 2K-Zusammensetzung wird im wasserfreien Zustand oder im Zustand der getrennten Komponenten die Lagerstabilität nicht beeinträchtigt. Werden die 1 K- oder bevorzugt 2K-Zusammensetzungen gemischt oder aufgetragen, startet die Vernetzungsreaktion. Dabei wird die Anfangsreaktion durch die Katalysatorzusammensetzung verzögert, das heißt in den ersten Minuten nach der Mischung der Komponenten tritt nur eine langsame Reaktion auf. Dieser Zeitraum wird als Induktionsperiode bezeichnet. Nach Ablauf der Induktionsperiode steigt die katalytische Wirkung der erfindungsgemäßen Katalysatormischungen in den vernetzenden Systemen an. Die Vernetzungsreaktion beschleunigt sich deutlich, das ist beispielsweise durch ein Ansteigen der Viskosität oder durch eine schnelle Zunahme der Vernetzung festzustellen.

Die erfindungsgemäßen Katalysatorzusammensetzungen können separat zubereitet werden. Sie sind lagerstabil und führen auch in den vernetzbaren Zusammensetzungenführen nicht zu einer vorzeitigen Reaktion der Bestandteile. Die vernetzbaren Zusammensetzungen enthaltend die geeigneten Katalysatormischungen ergeben nach der Verarbeitung auf den Substraten Massen, die unmittelbar nach dem Auftragen oder nach dem Verkleben noch in ihrer gegenseitigen Positionierung geändert und verbessert werden können. Nach Ablauf der Induktionsperiode erfolgt jedoch eine rasche Vernetzungsreaktion. Dabei ergibt sich, dass die verklebten Substrate in kurzer Zeit nach dem Verbinden weiterverarbeitet werden können, ohne dass die Klebverbindung beeinträchtigt wird.

Die Erfindung wird durch die nachfolgenden Beispiele näher ausgeführt.

### Beispiel 1:

Es wird eine flüssige Polyolmischung aus Trimethylolpropan ( ca. 3,8 %) und einem Polyesterpolyol aus Adipinsäure / Neopentylglycol( M ca. 530 g/mol, OHZ = 210) mit einer gesamt-OH-Zahl von 250 mg KOH/g FK hergestellt. Dazu werden 0,01 % DOTL ( Zinnkatalysator) gemischt (Komponente 1).

Diese Polyolkomponente wird gewichtsmäßig 1:1 mit Desmodur N 3300 (HDI-Isocyanurat) bei 40°C gemischt.

Danach wird die Reaktion bei 40°C durch Viskositätmessung bestimmt (Brookfield RVDT-II, nach EN ISO 2555). Versuchsreihen werden durchgeführt mit:
V1: wie beschrieben (Vergleich)
V2: + 0,1% DOTL (Vergleich)
V3: V2 + 0,1 % Kojisäure
V4: V2 + 0,25% Kojisäure
V5: V2 + 0,15% Gallussäure
V6: V2 + 0,3% 8-OH-Chinolin (Vergleichsversuch)

### Viskositätstabelle.

| Viskosität mPas | V1 | V2 Vergleich | V3 | V4 | V5 | V6 Vergleich |
|---|---|---|---|---|---|---|
| | | | | | | |
| 2 min | | 4000 | | | | |
| 4 min | | 9000 | < 2000 | < 2000 | < 2000 | < 2000 |
| 8 min | | 90000 | < 2000 | < 2000 | < 2000 | < 2000 |
| 20min | | Nicht messbar | < 2000 | < 2000 | < 2000 | < 2000 |
| 40 min | 8000 | | 2000 | 2000 | < 2000 | 2000 |
| 60 min | 17000 | | 3000 | 2500 | < 2000 | 3000 |
| 80 min | 40000 | | 4000 | 3000 | 2000 | 4000 |
| 100 min | 90000 | | 6000 | 4000 | 3000 | 9000 |
| NCO Wert | | | | | | |
| 72 h | 2,1 | | | 1,6 | | 2,5 |
| 96 h | 2,4 | | 0 | 0 | | 1,9 |

| | | | | | | |
|---|---|---|---|---|---|---|
| 168 h | 0 | | | | | |

Die vollständige Vernetzung wurde IR-spektroskopisch über die NCO-Gruppe bestimmt. (Peakhöhe über Basislinie)

Die erfindungsgemäßen Versuche zeigen eine langsamere Reaktion am Anfang, aber eine schnellere vollständige Vernetzung.

Es werden Folien mit dem Klebstoff V1 (Vergleich) und mit V4 verklebt. Die verklebten Proben werden bei 25°C und normaler Umgebung gelagert.
- Struktur1:: PET 12 µm / PE 70 µm
- Struktur2:: PET 12µm / CPP 50 mm

Auftragsgewicht 2 g/m², Lagerung/Härtung bei 25 °C

Es wird die Zeit bestimmt, bei der ein Strukturriss festgestellt wird.
- S1/V1: 4 d , 3,5 N/ 15mm (Vergleich)
- S1/V4: 3 d , 3,4 N/15 mm
- S2/V1: 7 d , 2,3 N/15mm (Vergleich)
- S2/V4: 4 d , 2,2 N/15 mm

Die erfindungsgemäßen Verklebungen zeigen bei längerer Verarbeitungszeit eine schnellere Aushärtung.

Aus V4 und V6 werden mit einem Schichtgewicht von 2g/m² ein Laminat aus Folien von 12 µm PET und 70 µm CPP hergestellt und 14 Tage bei 25°C ausgehärtet. Es werden Beutel 14,4x14,4 cm hergestellt, mit 100 ml Wasser oder mit 3% Essigsäure gefüllt, und durch Siegeln verschlossen. Danach werden die Proben 30 min bei 121°C im Autoklaven erhitzt und das Füllgut (Wasser, Essigsäure) auf Katalysatorbestandteile untersucht.

Sn und Kojisäure aus V4 sind nicht oberhalb der Nachweisgrenze zu finden. Im Vergleichversuch V6 ist 8-Hydroxychinolin in beiden Lösungen nachzuweisen.

### Beispiel 2:

Es wird eine Polyolkomponente aus Rizinusöl (50%) und Kreide (50%) hergestellt. Dazu werden 0,02 % DOTL (Zinnkatalysator) gemischt.

Diese Komponente wird mit Roh-MDI im Verhältnis 4:1 gemischt.

Die Startviskosität beträgt 1500 mPas (25°C). Es wird die Zeit bis zu 100000mPas bestimmt.

| | |
|---|---|
| V7 ohne retardierende Substanz : | 17 min (Vergleich) |
| V8 mit zusätzlich 0,05 % Kojisäure: | 102 min |

Die erfindungsgemäße Zusammensetzung zeigt eine retardierende Wirkung auch für solche Vergussmassen.

### Beispiel 3:

Es wird ein Prepolymer aus PPG 400 und PPG 1000 (1:1) und 4,4 -MDI hergestellt, dass einen Rest NCO-Gehalt von 13 % enthält.

Dazu wird als 2. Komponente ein Polyolgemisch aus Polyetherpolyolen PPG Diol (1000) / PPG Triol (450) / PPG Triol (1000) in 10/10/80 zugegeben. (NCO:OH = 1,4:1)

Es werden ggf. der Katalysator (DOTL, Zinnkatalysator) in die Polyolkomponente gemischt zusammen mit der retardierenden Substanz.

Danach wird die Reaktion bei 40°C durch Viskositätsmessung bestimmt.

Versuchsreihen werden durchgeführt mit:
V 9: Beispiel 3 ohne Katalysator (Vergleich)
V 10: V9 + 0,1 % DOTL (Vergleich)
V 11: V9 + 0,25% Tannin
V 12: V9 + 0,1 % Kojisäure
V 13: V9 + 0,25% Kojisäure
V 14: V9 + 0,5% Gallussäure
V 15: V9 + 0,5% Catechol (Vergleich)
V 16: V9 + 0,5% 3,4-Hydroxy-Zimtsäure (Vergleich)

### Viskositätstabelle.

| | V9 Verg. | V10 Verg. | V11 | V 12 | V 13 | V 14 | V 15 Verg. | V 16 Verg. |
|---|---|---|---|---|---|---|---|---|
| Viskosität mPas | | | | | | | | |
| 2 min | 2000 | 2000 | 2000 | 2000 | 2000 | 2000 | 2000 | 2000 |
| 4 min | 2000 | 2500 | 2000 | 2000 | 2000 | 2000 | 2800 | 2500 |

| | | | | | | | | |
|---|---|---|---|---|---|---|---|---|
| 8 min | 2000 | 4000 | 2000 | 2000 | 2000 | 2000 | 3500 | 3000 |
| 16min | 2000 | 9500 | 2200 | 2100 | 2000 | 2000 | 7500 | 6000 |
| 20 min | 2100 | 17000 | 2400 | 2400 | 2100 | 2000 | 10000 | 8000 |
| 30 min | 2800 | 49000 | 3000 | 4000 | 3000 | 2300 | >50000 | 20000 |
| 40 min | 4000 | >50000 | 6000 | 7500 | 4500 | 5000 | | >50000 |
| 60 min | 6500 | | 10000 | 12000 | 8000 | 8000 | | |

Die Reaktionsgeschwindigkeit gemessen als Viskositätsanstieg zeigt auch mit Vernetzung über aromatische Isocyanate eine Verzögerung der Reaktion.

## Patentansprüche

1. Vernetzbare Zusammensetzung enthaltend reaktive Polymere ausgewählt aus (i) Prepolymeren, die reaktive NCO-Gruppen aufweisen, oder (ii) Polymere, die reaktive Silan-Gruppen aufweisen, gegebenenfalls weitere Additive, und mindestens einen Katalysator auf Metall-Basis, wobei die Zusammensetzung bis zu 10 Gew-% einer retardierenden Substanz enthält, ausgewählt aus cyclischen α-Hydroxyketonen und/ oder Triphenolen mit drei benachbarten OH-Gruppen.

2. Zusammensetzung nach Anspruch 1, **dadurch gekennzeichnet, dass** der Katalysator ausgewählt wird aus Ca, Ba, Mn, Fe, Co, Ni, Al, Ti, V, Zr, Zn, Sn, Pb oder Bi - Verbindungen.

3. Zusammensetzung nach einem der Ansprüche 1 bis 2, **dadurch gekennzeichnet, dass** als cyclisches α-Hydroxyketon 5-, 6- oder 7-Ring-Verbindungen eingesetzt werden und als Triphenol 1-Alkyl-substituierte 2,3,4 - oder 3,4,5 - OH-Derivate eingesetzt werden.

4. Zusammensetzung nach einem der Ansprüche 1 bis 3, **dadurch gekennzeichnet, dass** die retardierende Substanz von 0,25 bis 4 Mol pro Mol der Metallverbindung enthalten ist.

5. Zusammensetzung nach einem der Ansprüche 1 bis 4, **dadurch gekennzeichnet, dass** die retardierende Substanz mindestens eine weitere OH, COOH- oder Ester-Gruppe aufweist.

6. Zusammensetzung nach einem der Ansprüche 1 bis 5, **dadurch gekennzeichnet, dass** die retardierende Substanz eine Molmasse unter 500 g/mol aufweist oder an einen festen Träger gebunden ist.

7. Zusammensetzung nach einem der vorhergehenden Ansprüche, **dadurch gekennzeichnet, dass** es sich um eine 2K-PU-Zusammensetzung handelt.

8. Zusammensetzung nach Anspruch 7, **dadurch gekennzeichnet, dass** Katalysator und retardierende Substanz in der OH-Komponente der 2K-PU-Zusammensetzung vorliegen.

9. Zusammensetzung nach Anspruch 8, **dadurch gekennzeichnet, dass** die retardierende Substanz nach der Vernetzung der Zusammensetzung in das Netzwerk einer Polyurethanzusammensetzung chemisch gebunden ist.

10. Katalysatorzusammensetzung für Vernetzungsreaktionen von NCO-OH-reaktiven oder Si(OR)-reaktiven Systemen, wobei der Katalysator ein Metallatom enthält ausgewählt aus Sn, Zn, Ti, Zr, Pb, Bi, Fe, Co, Ni, Mn, V oder Al und eine retardierende Substanz ausgewählt aus cyclischen α-Hydroxy Keto- 5-, 6- oder 7-Ring-Verbindungen und/oder 1-Alkyl-2,3,4 - oder 3,4,5 - Triphenol- Derivaten.

11. Katalysatorzusammensetzung nach Anspruch 10, **dadurch gekennzeichnet, dass** die retardierende Substanz mindestens eine weitere funktionelle-Gruppe aufweist, bevorzugt eine OH-, Ester- oder COOH-Gruppe.

12. Katalysatorzusammensetzung nach Anspruch 10 oder 11, **dadurch gekennzeichnet, dass** die retardierende Substanz von 0,25 bis 4 Mol bezogen auf das Metallatom enthalten ist.

13. Verwendung einer Katalysatorzusammensetzung nach Anspruch 10 bis 12 aus Metallkatalysator und retardierenden Substanzen als Katalysator in vernetzenden PU-Zusammensetzungen oder in Silan-vernetzenden Systemen.

14. Verwendung nach Anspruch 13, wobei eine vernetzbare Zusammensetzung nach einer der Ansprüche 1 bis 9 eingesetzt wird.

15. Verwendung nach Anspruch 13 oder 14 zum Herstellen von vernetzenden 2K-PU-oder 1K-PU-Klebstoffen, Dichtstoffen oder Vergussmassen.

## Claims

1. A cross-linkable composition containing reactive polymers selected from (i) prepolymers that have reactive NCO groups, or (ii) polymers that have reactive silane groups, optionally further additives, and at least one metal-based catalyst, wherein the composition contains up to 10 wt.% of a retarding substance selected from cyclic α-hydroxy ketones and/or triphenols having three neighboring OH groups.

2. The composition according to claim 1, **characterized in that** the catalyst is selected from Ca, Ba, Mn, Fe, Co, Ni, Al, Ti, V, Zr, Zn, Sn, Pb or Bi compounds.

3. The composition according to either claim 1 or claim 2, **characterized in that** 5-, 6- or 7-membered ring compounds are used as the cyclic α-hydroxy ketone, and 1-alkyl substituted 2,3,4-or 3,4,5-OH derivatives are used as the triphenol.

4. The composition according to one of claims 1 to 3, **characterized in that** the retarding substance is contained in an amount of from 0.25 to 4 moles per mole of the metal compound.

5. The composition according to one of claims 1 to 4, **characterized in that** the retarding substance has at least one further OH, COOH or ester group.

6. The composition according to one of claims 1 to 5, **characterized in that** the retarding substance has a molar mass of less than 500 g/mole or is bound to a solid carrier.

7. The composition according to one of the preceding claims, **characterized in that** it is a two-component polyurethane composition.

8. The composition according to claim 7, **characterized in that** the catalyst and retarding substance are present in the OH components of the two-component polyurethane composition.

9. The composition according to claim 8, **characterized in that**, after the composition has been cross-linked, the retarding substance is chemically bound into the network of a polyurethane composition.

10. A catalyst composition for cross-linking reactions of NCO-OH-reactive or Si(OR)-reactive systems, wherein the catalyst contains a metal atom selected from Sn, Zn, Ti, Zr, Pb, Bi, Fe, Co, Ni, Mn, V or Al and a retarding substance selected from cyclic α-hydroxy keto-5-, 6- or 7-membered ring compounds and/or 1-alkyl-2,3,4- or 3,4,5-triphenol derivatives.

11. The catalyst composition according to claim 10, **characterized in that** the retarding substance has at least one further functional group, preferably an OH, ester or COOH group.

12. The catalyst composition according to either claim 10 or claim 11, **characterized in that** the retarding substance is contained in an amount of from 0.25 to 4 moles based on the metal atom.

13. The use of a catalyst composition according to claims 10 to 12 comprising a metal catalyst and retarding substances as the catalyst in cross-linking polyurethane compositions or in silane cross-linking systems.

14. The use according to claim 13, wherein a cross-linkable composition according to one of claims 1 to 9 is used.

15. The use according to either claim 13 or claim 14 for producing cross-linking two-component polyurethane or one-component polyurethane adhesives, sealants or grouting compounds.

## Revendications

1. Composition réticulable contenant des polymères réactifs choisis parmi :
(i) des prépolymères présentant des groupements réactifs -NCO, ou ,
(ii) des polymères présentant des groupes silanes réactifs,
éventuellement d'autres additifs, et au moins un catalyseur à base métallique, la composition contenant jusqu'à 10 % en poids d'un produit retardant choisi parmi des α-hydroxycétones cycliques et/ou des triphénols comportant trois groupes OH voisins.

2. Composition selon la revendication 1, **caractérisée en ce que** le catalyseur est choisi parmi des composés de Ca, Ba, Mn, Fe, Co, Ni, Al, Ti, V, Zr, Zn, Sn, Pb ou Bi.

3. Composition selon la revendication 1 ou 2, **caractérisée en ce qu'**on utilise comme α-hydroxycétones cycliques des composés cycliques à 5, 6 ou 7 chaînons, et comme triphénols des dérivés 2,3,4-OH ou 3,4,5-OH substitués 1-alkyle.

4. Composition selon une des revendications 1 à 3, **caractérisée en ce qu'**elle contient le produit retardant à hauteur de 0,25 à 4 moles par mole de composé métallique.

5. Composition selon une des revendications 1 à 4, **caractérisée en ce que** le produit retardant présente au moins un autre groupement OH, COOH ou ester.

6. Composition selon une des revendications 1 à 5, **caractérisée en ce que** le produit retardant présente une masse molaire inférieure à 500g/mol ou est lié à un support solide.

7. Composition selon une des revendications précédentes, **caractérisée en ce qu'**il s'agit d'une composition 2K-PU.

8. Composition selon la revendication 7, **caractérisée en ce que** le catalyseur et le produit retardant sont présents dans les composants OH de la composition 2K-PU.

9. Composition selon la revendication 8, **caractérisée en ce qu'**après la réticulation de la composition, le produit retardant est lié chimiquement dans le réseau d'une composition de polyuréthane.

10. Composition de catalyseur pour réactions de réticulation de systèmes réactifs NCO-OH ou Si(OR), le catalyseur contenant un atome métallique choisi parmi Sn, Zn, Ti, Zr, Pb, Bi, Fe, Co, Ni, Mn, V ou Al et un produit retardant choisi parmi des composés α-hydroxycétones cycliques à 5, 6 ou 7 chaînons et/ou des dérivés 2,3,4-triphénols ou 3,4,5-triphénols substitués 1-alkyle.

11. Composition de catalyseur selon la revendication 10, **caractérisée en ce que** le produit retardant présente au moins un autre groupe fonctionnel, préférentiellement un groupement OH, ester ou COOH.

12. Composition de catalyseur selon la revendication 10 ou 11, **caractérisée en ce que** le produit retardant est contenu à hauteur de 0,25 à 4 moles rapportés à l'atome métallique.

13. Utilisation d'une composition de catalyseur selon une des revendications 10 à 12, constituée d'un catalyseur métallique et de produits retardants dans des compositions réticulantes de polyuréthane ou dans des systèmes réticulateurs de silanes.

14. Utilisation selon la revendication 13, où on utilise une composition réticulable selon une des revendications 1 à 9.

15. Utilisation selon la revendication 13 ou 14 pour fabriquer des colles, mastics ou une matière de scellement 2K-PU ou 1 K-PU réticulants.
